Europäisches Patentamt

European Patent Office

Office européen des brevets

(11) Publication number: **0 278 563**
A1

# EUROPEAN PATENT APPLICATION

(21) Application number: **88200179.5**

(22) Date of filing: **03.02.88**

(51) Int. Cl.⁴: **B32B 27/08** , **C08L 55/02** , **C08L 51/04**

(30) Priority: **09.02.87 NL 8700291**

(43) Date of publication of application:
**17.08.88 Bulletin 88/33**

(84) Designated Contracting States:
**AT BE CH DE ES FR GB IT LI NL SE**

(71) Applicant: **STAMICARBON B.V.**
**Mijnweg 1**
**NL-6167 AC Geleen(NL)**

(72) Inventor: **de Warrimont, Jean Pierre L. M. N.**
**Past. Stassenstraat 9**
**NL-6243 BW Meerssen(NL)**
Inventor: **Dunning, Leslie Granthem William**
**Tuulshoek 38**
**NL-6093 CR Heythysen(NL)**

(54) **Multi-layer composite.**

(57) The invention relates to a composite consisting of at least layers (A) and (B), comprising at least a polyamide layer, and a layer which is a mixture of
5-95 wt.% of a copolymer of:

    1.1. 50-90 wt.% of a vinylaromatic compound

    1.2. 10-50 wt.% of an unsaturated dicarboxylic acid and/or anhydride

    1.3. 0-20 wt.% of one or more other monomers

    1.4. 0-60 wt.% of a rubber and 95-5 wt.% of a graft copolymer of:

    2.1. 10-50 wt.% rubber

    2.2. 5-30 wt.% acrylonitrile

    2.3. 20-60 wt.% of a vinylaromatic compound.

The composite has an optimum balance of mechanical properties and particularly suitable for manufacturing a tube consisting of the two layers.

EP 0 278 563 A1

# 0 278 563

## MULTI-LAYER COMPOSITE

The invention relates to a composite consisting of at least two layers, comprising at least of a polyamide layer.

Such multi-layer composites are described in the American Patent US-A-4.301.216. Laminates in this patent are composed of a polyamide layer and a layer containing a carboxylated styrene-acrylonitrile (SAN)-copolymer.

Laminates composed of a polyamide layer and a styrene-butadiene block copolymer with carboxyl groups in the side chains, obtained by grafting 0.05-2 wt.% of maleic anhydride (MA), are known from DE-A-2.952.359.

Although the described multi-layer composites have satisfactory adhesion, there is a need for multi-layer composites which not only have good adhesion, but also an optimum balance of properties like stress crack resistance and resistance to deformation at high temperatures (HDT).

The aim of the invention is to provide a composite, consisting of at least two layers, which has such an optimum balance.

The composite according to the invention is characterized in that it consists of at least layers (A) and (B), which are composed as follows:

(A) a polyamide
(B) a mixture of
    B.1. 5-95 wt.% of a copolymer of:
B.1.1. 50-90 wt.% of a vinylaromatic compound
B.1.2. 10-50 wt.% of an unsaturated dicarboxylic acid and/or anhydride
B.1.3. 0-20 wt.% of one or more other monomers
B.1.4. 0-60 wt.% of a rubber
    B.2. 95-5 wt.% of a graft copolymer of:
B.2.1. 10-50 wt.% rubber
B.2.2. 5-30 wt.% acrylonitrile
B.2.3. 20-60 wt.% of a vinylaromatic compound.

Surprisingly, it has now been found that using the combination of at least two layers according to the invention not only results in a good adhesion between the layers, but also extremely good properties as regards impact resistance and resistance to deformation at high temperatures.

In particular, the invention relates to those compositions in which component B.1. is a rubber-modified copolymer of styrene and maleic anhydride with a rubber content of 5-60 wt.%, preferably 10-30 wt.%. More in particular those composites which also contain methylmethacrylate as third monomer.

The good adhesion between layers (A) and (B) is to be ascribed to the dicarboxylic anhydride groups present in layer (B). The composite according to the invention is not limited to two layers, but may contain a third layer (C) to create a composite of three layers (A-B-C), in which (B) is the middle layer.

A graft copolymer of styrene and/or α-methylstyrene together with acrylonitrile on a rubber, with a rubber content of 20-80 wt.%, is particularly suitable as layer (C).

The polyamides applied in the composite according to the invention are known per see, notably the conventional polyamide resins known under the name of nylon, including the aliphatic polylactams. Examples are nylon 4.6, nylon 6, nylon 6.6, nylon 6.10, nylon 11, nylon 12. Preferably, nylon 12 is used in the invention.

The vinylaromatic compound in layer (B) is preferably styrene and/or α-methylstyrene. The unsaturated dicarboxylic acid and/or anhydride may consist partly or entirely of itaconic acid, citraconic acid and/or maleic anhydride. Preferably, maleic anhydride is used. The other monomers, component B.1.3., may be, for example, acrylonitrile and methylmethacrylate; preferably, there is at least methylmethacrylate is present. If component B.1. is modified with rubber, the rubber content is preferably 10-30 wt.%.

The rubber is chosen from the group consisting of polybutadiene, butadiene-styrene, butylacrylate, butadiene-acrylonitrile, EPT, EPDM, or mixtures of two or more of these rubbers.

Rubber-modified copolymers applied in B.1. are synthesized by polymerization of the monomers in the presence of rubber. The preparation is described in, for example, the American patents US-A-3.919.354, US-A-2.971.939, US-A-3.336.267 and US-A-4.197.376.

The graft copolymer that may be added as layer (C) contains 20-40 wt.% acrylonitrile, 50-80 wt.% styrene or α-methylstyrene and 0-30 wt.% of one or more other monomers together with 20-50 wt.% of a butadiene rubber or styrene butadiene rubber (ABS polymers) and can be synthesized in the usual manner, for example by means of mass polymerization, emulsion polymerization, suspension polymerization or mass-suspension polymerization.

The known processing methods may be applied to produce an object of several layers, for example multi-layer injection moulding and coextrusion. In coextrusion the layers are, one on top of the other, brought into a mould via the plastic phases.

The invention is particularly suitable for manufacturing a tube consisting of at least two layers. Such a tube can be produced through coextrusion. A process for the production of a tube consisting of several layers is, for example, described in the American patent US-A-4.249.875.

The individual components in the composite according to the invention may contain the usual additives, to a maximum of 40 wt.%, for instance colourants, pigments, flame retardants, stabilizers, fillers, glass fibres, antistatics, etc.

The invention is further elucidated with the following example, but is not limited hereto.

### Example 1

83 parts by weight of an ABS polymer with a rubber content of 26 wt.% is mixed with 17 parts by weight of rubber-modified styrene/maleic anhydride/methyl methacrylate (RM-S/MA/MMA) with a rubber content of 13.6 %, to which the following additives are added:

0.5 parts by weight magnesium stearate, 1 part by weight diphenylisooctyl phosphite, 0.45 parts by weight distearylthiodipropionate and 0.45 parts by weight 1-1-bis-(5-tert-butyl-4-hydroxy-2-methylphenyl)butane. After this mixture has been processed to form a granulate through extrusion via the molten phase, it is processed through coextrusion with nylon 12 to form a tube, in such a manner that the inside layer of the tube consists of nylon 12.

### Comparative example

The same as example 1, only in this case 100 parts by weight of ABS are used and no RM-S/MA/MMA is added.

Table 1 presents a survey of the measured properties of the tube produced.

### T A B L E  1

|  | Example 1 | Comp. Example |
|---|---|---|
| – HDT (1.85 N/mm2) ASTM D 648 | 96¤C | 90¤C |
| – Bursting pressure; extrapolation 50 years according to BS 5391; tangential stress σ | 16.4 N/mm2 | 15.5 N/mm2 |
| – chemical resistance to synthetic oil | good | moderate |

**0 278 563**

## Claims

1. Composition consisting of at least layers (A) and (B), comprising at least a polyamide layer, characterized in that

(A) is a polyamide and
(B) a mixture of
B.1. 5-95 wt.% of a copolymer of:

B.1.1. 50-90 wt.% of a vinylaromatic compound
B.1.2. 10-50 wt.% of an unsaturated dicarboxylic acid and/or anhydride
B.1.3. 0-20 wt.% of one or more other monomers
B.1.4. 0-60 wt.% of a rubber

B.2. 95-5 wt.% of a graft copolymer of:

B.2.1. 10-50 wt.% rubber
B.2.2. 5-30 wt.% acrylonitrile
B.2.3. 20-60 wt.% of a vinylaromatic compound.

2. Composite according to claim 1, characterized in that component B.1. is a rubber-modified copolymer of styrene and maleic anhydride, with a rubber content of 5-60 wt.%.

3. Composite according to any one of claims 1-2, characterized in that component B.1. also contains methylmethacrylate.

4. Composite according to any one of claims 1-3, to which a third layer (C) has been added, characterized in that (C) is a graft copolymer of styrene and/or α-methylstyrene with acrylonitrile on a butadiene rubber, with a rubber content of 20-80 wt.%.

5. Composite according to any one of claims 1-4, characterized in that layer (A) is nylon 12.

6. Object entirely or partly manufactured from a composite according to any one of claims 1-5.

7. Tube manufactured from a composite according to any one of claims 1-5.

4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | FR-A-2 112 274  (BASF)<br>* Claims 1,2; page 1, line 10 - page 3, line 26; examples 1-3 * | 1,4-7 | B 32 B  27/08<br>C 08 L  55/02<br>C 08 L  51/04 |
| A | EP-A-0 026 659  (MONSANTO)<br>* Claims 1-3,8-11,15; page 2, line 23 - page 4, line 31; page 5, line 32 - page 6, line 9 * | 1-6 | |
| A | GB-A-2 029 766  (KUREHA KAGAKU K.K.K.)<br>* Claims 1-4,6,9; page 1, line 20 - page 4, line 51 * | 1,2,4-7 | |

TECHNICAL FIELDS
SEARCHED (Int. Cl.4)

B 32 B

The present search report has been drawn up for all claims

| Place of search | Date of completion of the search | Examiner |
|---|---|---|
| THE HAGUE | 15-04-1988 | BLASBAND I. |

EPO FORM 1503 03.82 (P0401)